# EUROPEAN PATENT APPLICATION

(11) **EP 3 627 439 A1**
(43) Date of publication of application: **25.03.2020**
(21) Application number: 18828284.2
(22) Date of filing: 04.04.2018
(51) Int. Cl.: G06T 3/00, H04N 13/00

(54) **METHOD AND DEVICE FOR PROCESSING MEDIA DATA**

(30) Priority: 07.07.2017 CN 201710550584
(71) Applicant: Huawei Technologies Co., Ltd., Longgang District Shenzhen, Guangdong 518129 (CN)
(72) Inventor: DI, Peiyun, Shenzhen Guangdong 518129 (CN); XIE, Qingpeng, Shenzhen Guangdong 518129 (CN)
(74) Representative: Maiwald Patent- und Rechtsanwaltsgesellschaft mbH
(86) International application number: PCT/CN2018/081839
(87) International publication number: WO 2019/007120

(57) **Abstract**

This application provides a media data processing method and apparatus. The method includes: obtaining bitstream data, where the bitstream data includes region type information, the region type information is used to indicate a description manner of a location of a target region on a sphere, and the description manner includes a point description manner or a surface description manner; parsing the bitstream data to obtain region location information corresponding to the description manner, where the region location information is used to indicate the location of the target region on the sphere; obtaining media data corresponding to the target region; and processing the media data based on the region type information and the region location information. This application helps to improve flexibility of obtaining region location information of a target region.

## Description

This application claims priority to Chinese Patent Application No. 201710550584.3, filed with the Chinese Patent Office on July 07, 2017 and entitled "MEDIADATAPROCESSING METHOD AND APPARATUS", which is incorporated herein by reference in its entirety.

### TECHNICAL FIELD

This application relates to the field of streaming media transmission, and more specifically, to a media data processing method and apparatus.

### BACKGROUND

Omnidirectional media mainly refers to an omnidirectional video (360° video) and associated audio, where the omnidirectional video may be understood as a video presented on a sphere. The ISO/IEC 23090-2 standard specification is also referred to as the omnidirectional media format (Omnidirectional media format, OMAF). The specification defines a media application format that can implement presentation of the omnidirectional media in application. When the omnidirectional media is presented to a user by using a terminal device, a sphere that presents the omnidirectional media may be divided into a plurality of regions, and omnidirectional media corresponding to some regions (namely, target regions) of the sphere is presented in the regions.

Before the omnidirectional media is presented in the target regions, region location information of the target regions on the sphere needs to be determined. Currently, a location of a target region on a sphere is determined mainly by using a location of a center point in the target region and a region range of the target region.

Based on the foregoing manner of determining the location of the target region on the sphere, two description manners for describing the location of the target region on the sphere are specified in the standard: a point description manner and a surface description manner. In the two different description manners, valid region location information included in bitstream data is actually different. For example, if the description manner is the point description manner, the bitstream data includes location information of the center point of the target region and region range information of the target region, but only the location information of the center point is valid and indicates coordinates of the center point of the target region on the sphere; and the region range information of the target region is invalid, and a value of the region range information of the target region is 0. If the description manner is the surface description manner, the bitstream data also includes location information of the center point of the target region and region range information of the target region, both the location information of the center point and the region range information are valid, and the location of the center point indicates coordinates of the center point of the target region on the sphere, and the region range information indicates the region range of the target region on the sphere.

However, it is specified in a current standard that when determining the location information of the target region on the sphere, the terminal device needs to obtain all region location information from the bitstream data. To be specific, even if the description manner is the point description manner, and the range information of the target region is invalid, the terminal device also needs to obtain the location information of the center point of the target region and the range information of the target region from the bitstream data. This manner of obtaining region location information of a target region is not flexible enough.

### SUMMARY

This application provides a media data processing method and apparatus, to help to improve flexibility of obtaining region location information of a target region.

According to a first aspect, a media data processing method is provided. The method includes: obtaining bitstream data, where the bitstream data includes region type information, the region type information is used to indicate a description manner of a location of a target region on a sphere, and the description manner includes a point description manner or a surface description manner; parsing the bitstream data to obtain region location information corresponding to the description manner, where the region location information is used to indicate the location of the target region on the sphere; obtaining media data corresponding to the target region; and processing the media data based on the region type information and the region location information.

In this embodiment of this application, the region location information that needs to be obtained by parsing the bitstream data and that corresponds to the description manner may be determined based on the region type information included in the bitstream data. To be specific, the region location information may be obtained, based on the description manner of the target region, selectively by parsing the bitstream. This avoids a case in which all region location information of the target region needs to be parsed from the bitstream data in the prior art. This application helps to improve flexibility of obtaining region location information of a target region.

Further, obtaining region location information corresponding to the point description manner helps to reduce a delay of obtaining region location information of a target region.

In a possible implementation, the bitstream data is a media data track.

In a possible implementation, the region type information is located in supplemental enhancement information SEI of the media data track.

In a possible implementation, the bitstream data is a metadata track.

In a possible implementation, the bitstream data is a metadata track, and the region location information may be located in a sample entry in the metadata track.

In a possible implementation, the bitstream data includes a shape type parameter of the target region, and a value of the shape type parameter indicates the region type information.

Indicating region type information by using a value of an existing shape type parameter helps to save an overhead caused in an information transmission process.

In a possible implementation, the shape type parameter of the target region may be located in the metadata track for describing the location of the target region on the sphere, and the bitstream is the metadata track for describing the location of the target region on the sphere; and/or
the shape type parameter of the target region may alternatively be located in a media data track corresponding to the target region, and the bitstream is the media data track corresponding to the target region.

According to a second aspect, a media data processing method is provided. The method includes: generating bitstream data, where the bitstream data includes region type information of a target region on a sphere, the region type information is used to indicate a description manner of a location of the target region on the sphere, the description manner includes a point description manner or a surface description manner, the point description manner and the surface description manner correspond to different region location information in the bitstream data, and the region location information is used to indicate the location of the target region on the sphere; and sending the bitstream data.

In this embodiment of this application, the region location information that needs to be obtained by parsing the bitstream data and that corresponds to the description manner may be determined based on the region type information included in the bitstream data. To be specific, the region location information may be obtained, based on the description manner of the target region, selectively by parsing the bitstream. This avoids a case in which all region location information of the target region needs to be parsed from the bitstream data in the prior art. This application helps to improve flexibility of obtaining region location information of a target region.

Further, obtaining region location information corresponding to the point description manner helps to reduce a delay of obtaining region location information of a target region.

In a possible implementation, the bitstream data is a media data track.

In a possible implementation, the region type information is located in supplemental enhancement information SEI of the media data track.

In a possible implementation, the bitstream data is a metadata track.

In a possible implementation, the bitstream data is a metadata track, and the region location information may be located in a sample entry in the metadata track.

In a possible implementation, the bitstream data includes a shape type parameter of the target region, and a value of the shape type parameter indicates the region type information.

Indicating region type information by using a value of an existing shape type parameter helps to save an overhead caused in an information transmission process.

In a possible implementation, the shape type parameter of the target region may be located in the metadata track for describing the location of the target region on the sphere, and the bitstream is the metadata track for describing the location of the target region on the sphere; and/or
the shape type parameter of the target region may alternatively be located in a media data track corresponding to the target region, and the bitstream is the media data track corresponding to the target region.

According to a third aspect, an embodiment of this application provides a media information processing method. The method includes:
obtaining metadata information of media data, where the metadata information includes source information of metadata, the source information is used to indicate a recommender of the media data, and the media data is video data corresponding to a sub-region in an omnidirectional video; and
processing the media data based on the source information of the metadata.

In a possible implementation, the metadata is information about some attributes of the video data, such as duration, a bit rate, a frame rate, a location in a spherical coordinate system, and the like that are corresponding to the video data.

In a possible implementation, sub-regions of the omnidirectional video refer to some regions in video space corresponding to the omnidirectional video.

In a possible implementation, the source information of the metadata may indicate that video data corresponding to the metadata is recommended by an author of an omnidirectional video, or may indicate that video data corresponding to the metadata is recommended by a user of an omnidirectional video, or may indicate that video data corresponding to the metadata is recommended after statistics on results of viewing an omnidirectional video by a plurality of users are collected.

According to the media information processing method in this embodiment of the present invention, information about the recommender of the media data may be used as a reference for a client during data processing, thereby increasing choices for a user and improving user experience.

In a possible implementation of this embodiment of the present invention, the obtaining metadata information of media data includes:
obtaining a metadata track (track) of the media data, where the metadata track includes the source information of the metadata.

In a possible implementation, address information of the metadata track may be obtained by using a media presentation description file, and then an information obtaining request may be sent to this address, to receive and obtain the metadata track of the media data.

In a possible implementation, address information of the metadata track may be obtained by using a separate file, and then an information obtaining request may be sent to this address, to receive and obtain the metadata track of the media data.

In a possible implementation, a server sends the metadata track of the media data to a client.

In a possible implementation, a track (track) is a timed sequence of samples encapsulated according to an ISO base media file format (ISO base media file format, ISOBMFF). For example, a video track is a video sample obtained by encapsulating, according to a specification of the ISOBMFF, a bitstream that is generated after a video encoder encodes each frame. For a specific definition of the track, refer to a related description in ISO/IEC 14496-12.

In a possible implementation, for related attribute and data structure of the media presentation description file, refer to related descriptions in ISO/IEC 23009-1.

In a possible implementation, the source information of the metadata may be stored in a newly-added box (box) in the metadata track, and the source information of the metadata may be obtained by parsing data in the box.

In a possible implementation, the source information of the metadata may be an attribute added to an existing box in the metadata track, and the source information of the metadata may be obtained by parsing the attribute.

The source information of the metadata is encapsulated into the metadata track, so that the client can obtain the source information of the metadata when obtaining the metadata track, and the client can comprehensively consider another attribute of the metadata and the source information of the metadata to perform subsequent processing on associated media data.

In a possible implementation of this embodiment of the present invention, the obtaining metadata information of media data includes:
obtaining a media presentation description file of the media data, where the media presentation description file includes the source information of the metadata.

A client may obtain the media presentation description file by sending an HTTP request to a server, or a server may directly push the media presentation description file to a client. The client may alternatively obtain the media presentation description file in another possible manner. For example, the client may obtain the media presentation description file by interacting with another client side.

In a possible implementation, for related attribute and data structure of the media presentation description file, refer to related descriptions in ISO/IEC 23009-1.

In a possible implementation, the source information of the metadata may be information indicated in a descriptor, or the source information of the metadata may be attribute information.

In a possible implementation, the source information of the metadata may be at an adaptation set (adaptation set) level or at a representation (representation) level in the media presentation description file.

In a possible implementation of this embodiment of the present invention, the obtaining metadata information of media data includes:
obtaining a bitstream that includes the media data, where the bitstream further includes supplemental enhancement information (supplementary enhancement information, SEI), and the supplemental enhancement information includes the source information of the metadata.

In a possible implementation, a client may send a media data obtaining request to a server, and then receive media data sent by the server. For example, the client may construct a uniform resource locator (Uniform Resource Locator, URL) by using a related attribute and address information in a media presentation description file, send an HTTP request to the URL, and then receive corresponding media data.

In a possible implementation, a client may receive media data stream pushed by a server.

In a possible implementation of this embodiment of the present invention, the source information of the metadata is a source type identifier. Different source type identifiers or values of source type identifiers may indicate corresponding source types. For example, a flag with one bit may be used to indicate a source type, or a field with more bits may be used to identify a source type. In an example, the client side stores a file of a correspondence between the source type identifier and the source type, and therefore, the client may determine corresponding source types based on different values of source type identifiers or different source type identifiers.

In a possible implementation, one source type corresponds to one recommender. For example, the source type may be a recommendation of a video author, a recommendation of a user, or a recommendation made after statistics on viewing results of a plurality of users are collected.

In a possible implementation of this embodiment of the present invention, the source information of the metadata includes a semantic representation of the recommender of the media data. For example, codewords in ISO-639-2/T may be used to represent various types of semantics.

In a possible implementation of this embodiment of the present invention, the processing media data corresponding to the metadata based on the source information of the metadata may include the following implementations:
if the client side has not obtained the media data corresponding to the metadata, the client side may request the corresponding media data from a server side or another terminal side based on source information chosen by the user; or
if the client side has obtained the media data corresponding to the metadata, the client side may present or transmit the media data based on source information chosen by the user.

According to a fourth aspect, an apparatus is provided. The apparatus includes modules configured to perform the method according to the first aspect or any one possible implementation of the first aspect.

According to a fifth aspect, an apparatus is provided. The apparatus includes modules configured to perform the method according to any possible implementation of the second aspect or the first aspect.

According to a sixth aspect, an apparatus is provided. The apparatus includes modules configured to perform the method according to any possible implementation of the second aspect or the first aspect.

According to a seventh aspect, an apparatus is provided. The apparatus includes a memory, a processor, an input/output interface, and a transceiver. A communication connection exists among the memory, the processor, the input/output interface, and the transceiver. The memory is configured to store an instruction, and the processor is configured to execute the instruction stored in the memory. When the instruction is executed, the processor performs the method in the first aspect by using the transceiver, and controls the input/output interface to receive input data and information and to output data such as an operation result.

According to an eighth aspect, an apparatus is provided. The apparatus includes a memory, a processor, an input/output interface, and a transceiver. A communication connection exists among the memory, the processor, the input/output interface, and the transceiver. The memory is configured to store an instruction, and the processor is configured to execute the instruction stored in the memory. When the instruction is executed, the processor performs the method in the second aspect by using the transceiver, and controls the input/output interface to receive input data and information and to output data such as an operation result.

According to a ninth aspect, an apparatus is provided. The apparatus includes a memory, a processor, an input/output interface, and a transceiver. A communication connection exists among the memory, the processor, the input/output interface, and the transceiver. The memory is configured to store an instruction, and the processor is configured to execute the instruction stored in the memory. When the instruction is executed, the processor performs the method in the third aspect by using the transceiver, and controls the input/output interface to receive input data and information and to output data such as an operation result.

According to a tenth aspect, a computer-readable storage medium is provided. The computer-readable storage medium stores an instruction, and when the instruction is run on a computer, the computer is enabled to perform the methods according to the foregoing aspects.

According to an eleventh aspect, a computer program product including an instruction is provided. When the instruction is run on a computer, the computer is enabled to perform the methods according to the foregoing aspects.

### BRIEF DESCRIPTION OF DRAWINGS

FIG. 1 is a schematic field of view diagram corresponding to a field of view change;
FIG. 2 is a schematic diagram of a spatial object according to an embodiment of this application;
FIG. 3 is a schematic diagram of a relative location of a center point of a spatial object in panoramic space;
FIG. 4 shows an example of a coordinate system for describing a spatial object according to an embodiment of this application;
FIG. 5 shows another example of a coordinate system for describing a spatial object according to an embodiment of this application;
FIG. 6 shows still another example of a coordinate system for describing a spatial object according to an embodiment of this application;
FIG. 7 shows an example of an application scenario of a method and an apparatus according to an embodiment of this application;
FIG. 8 is a schematic flowchart of a media data processing method according to an embodiment of this application;
FIG. 9 is a schematic flowchart of a media data processing method according to an embodiment of this application;
FIG. 10 is a schematic block diagram of a media data processing apparatus according to an embodiment of this application;
FIG. 11 is a schematic block diagram of an apparatus according to another embodiment of this application;
FIG. 12 is a schematic block diagram of a media data processing apparatus according to an embodiment of this application;
FIG. 13 is a schematic flowchart of a media information processing method according to an embodiment of this application;
FIG. 14 is a schematic structural diagram of a media information processing apparatus according to an embodiment of this application;
FIG. 15 is a schematic diagram of specific hardware of a media information processing apparatus according to an embodiment of this application;
FIG. 16 is a schematic diagram of a mapping relationship between a spatial object and video data according to an embodiment of this application; and
FIG. 17 is a schematic diagram of a mapping relationship between a spatial object and video data according to an embodiment of this application.

### DESCRIPTION OF EMBODIMENTS

The following describes technical solutions in this application with reference to the accompanying drawings.

For ease of understanding, related concepts, a manner of presenting media data, and an applicable system in the embodiments of this application are briefly described first.

(1) Explanation of concepts related to the embodiments of this application
1. A track (track) is defined in the standard ISO/IEC 14496-12 as "timed sequence of related samples (q.v.) in an ISO base media file. NOTE: For media data, a track corresponds to a sequence of images or sampled audio; for hint tracks, a track corresponds to a streaming channel."
   A track is defined in the standard ISO/IEC 14496-12 as "timed sequence of related samples in an ISO media file. NOTE: For media data, a track is a sequence of images or sampled audio; for hint tracks, a track corresponds to a streaming channel." To be specific, the track is a timed sequence of samples encapsulated according to an ISO base media file syntax (ISO base media file format, ISOBMFF). For example, a video track is a video sample obtained by encapsulating, according to a specification of the ISOBMFF, a bitstream that is generated after a video encoder encodes each frame.
2. Box (box) means that an ISOBMFF file includes a plurality of boxes, where one box may include another box.
   The box is defined in the ISO/IEC 14496-12 standard as "object-oriented building block defined by a unique type identifier and length. NOTE: Called 'atom' in some specifications, including the first definition of MP4."
   The box is defined in the ISO/IEC 14496-12 standard as "object-oriented building block defined by a unique type identifier and length. NOTE: Called 'atom' in some specifications, including the first definition of MP4."
   Specifically, a higher-layer and important box defined in the standard may be a media data box (Media Data Box) and a movie box. A type of the media data box may be 'mdat', and the media data box is used to store media data or guide a server to send information about the data in a packet. A type of the movie box may be 'moov', and the movie box is used to provide descriptive information about data in the media data box, so as to facilitate playing and transmission of the data in the media data box.
3. Supplemental enhancement information (supplementary enhancement information, SEI) is a type of a network access unit (Network Abstract Layer Unit, NALU) defined in the video coding and decoding standards h.264 and h.265 released by the International Telecommunication Union (International Telecommunication Union, ITU).
4. A media presentation description (Media presentation description, MPD) is a file specified in the ISO/IEC 23009-1 standard, where the file includes metadata for a client to construct an HTTP-URL. The MPD includes one or more period (period) elements; each period element includes one or more adaptation sets (adaptation set); each adaptation set includes one or more representations (representation); and each representation includes one or more segments. The client selects a representation based on information in the MPD, and constructs an HTTP-URL of a segment.

(2) The manner of presenting media data to which the embodiments of this application are applicable

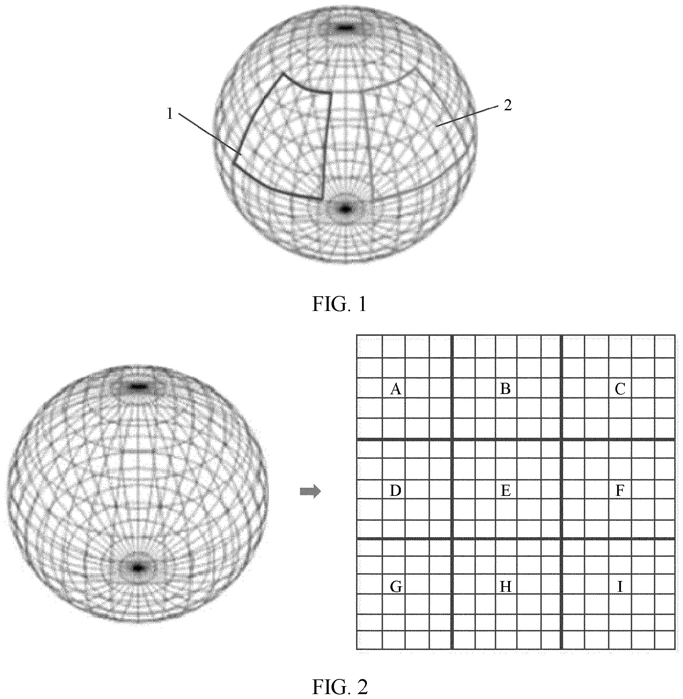

Currently, with increasing popularity of applications for viewing a virtual reality (Virtual Reality, VR) video such as a 360-degree video, increasingly more users participate in experience of viewing a wide-angle VR video. Such new video viewing applications not only bring a new video viewing mode and new visual experience to the users, but also bring a new technical challenge. In a process of viewing the wide-angle video such as the 360-degree video (the 360-degree video is used as an example for description in the embodiments of this application), a spatial region (the spatial region may also be referred to as a target region or a spatial object) of the VR video is 360-degree panoramic space (or referred to as omnidirectional space or a panoramic spatial object) that exceeds a normal visual range of human eyes. Therefore, when viewing the video, a user changes a field of view (field of view, FOV) at any time. When using different fields of view, the user sees different video pictures. In this case, content presented in the video needs to be changed with the field of view of the user. FIG. 1 is a schematic field of view diagram corresponding to a field of view change. A block 1 and a block 2 represent two different fields of view of a user. When viewing a video, the user may switch a field of view for the user to view the video from the block 1 to the block 2 through an operation such as eye movement, head movement, or switching of an image on a video viewing device. A video picture viewed by the user when the field of view is the block 1 is a video picture presented at this moment in one or more spatial objects corresponding to the field of view. The field of view of the user is switched to the block 2 at a next moment. In this case, the video picture viewed by the user should be switched to a video picture presented at the moment in a spatial object corresponding to the block 2.

In some feasible implementations, for output of a wide-angle 360-degree video picture, a server may divide panoramic space (or referred to as a panoramic spatial object) in a field of view range corresponding to an omnidirectional video into a plurality of spatial objects. Each spatial object may correspond to one sub-field of view of the user. A plurality of sub-fields of view are spliced into a complete human-eye observation field of view. Each spatial object corresponds to one sub-region of the panoramic space. That is, a human-eye field of view (hereinafter referred to as a field of view) may correspond to one or more spatial objects obtained after division. The spatial objects corresponding to the field of view are all spatial objects corresponding to content objects in a human-eye field of view range. The human-eye observation field of view may be dynamically changed. However, the field of view range may usually be 120 degrees x 120 degrees. A spatial object corresponding to a content object in the human-eye field of view range of 120 degrees x 120 degrees may include one or more spatial objects obtained through division, for example, a field of view 1 corresponding to the block 1 and a field of view 2 corresponding to the block 2 in FIG. 1. Further, a client may obtain, by using an MPD, spatial information of a video bitstream prepared by the server for each spatial object, and then the client may request, from the server based on a field of view requirement, a video bitstream segment/video bitstream segments corresponding to one or more spatial objects in a time period, and output the corresponding spatial objects based on the field of view requirement. The client outputs, in a same time period, video bitstream segments corresponding to all spatial objects in a 360-degree field of view range, to output and display a complete video picture in the time period in entire 360-degree panoramic space.

In specific implementation, when obtaining 360-degree spatial objects through division, the server may first map a sphere to a plane, and divide the plane into the spatial objects. Specifically, the server may map the sphere to a longitude and latitude plan view in a longitude and latitude mapping manner. FIG. 2 is a schematic diagram of a spatial object according to an embodiment of this application. A server may map a sphere to a longitude and latitude plan view, and divide the longitude and latitude plan view into a plurality of spatial objects A to I. Further, the server may alternatively map the sphere to a cube, and then unfold a plurality of surfaces of the cube to obtain a plan view; or the server may map the sphere to another polyhedron, and then unfold a plurality of surfaces of the polyhedron to obtain a plan view. The server may alternatively map the sphere to a plane in more mapping manners. This may be specifically determined based on an actual application scenario requirement, and is not limited herein. The following provides a description based on the longitude and latitude mapping manner with reference to FIG. 2. As shown in FIG. 2, after dividing panoramic space of the sphere into the plurality of spatial objects A to I, the server may prepare one group of video bitstreams for each spatial object. Each spatial object corresponds to one group of video bitstreams. When a client user switches a field of view for viewing a video, the client may obtain, based on a new field of view chosen by the user, a bitstream corresponding to a new spatial object, and further present, in the new field of view, video content of the bitstream corresponding to the new spatial object.

When producing a video, a video producer (hereinafter referred to as an author) may design, based on a requirement of a plot of the video, a main plot line for video playing. In a video playing process, a user only needs to view a video picture corresponding to the main plot line to learn about the plot, and another video picture is optional. It may be learned that, in the video playing process, a client may select a video picture corresponding to the plot for playing, and may not present another video picture, so as to save transmission resources and storage space resources for video data, and increase video data processing efficiency. After designing a main plot, the author may specify, based on the main plot line, a video picture to be presented to the user at each playing moment during the video playing. The plot of the main plot line may be obtained by splicing video pictures at all playing moments together in a time sequence. The video picture to be presented to the user at each playing moment is a video picture to be presented in a spatial object corresponding to each playing moment, namely, a video picture to be presented in the spatial object in this time period. In specific implementation, a field of view corresponding to the video picture to be presented at each playing moment may be set as an author field of view, a spatial object in which a video picture in the author field of view is presented may be set as an author spatial object, and a bitstream corresponding to an author field of view object may be set as an author field of view bitstream. The author field of view bitstream includes video frame data of a plurality of video frames (encoded data of the plurality of video frames). Each video frame may be presented as one picture. That is, the author field of view bitstream corresponds to a plurality of pictures. In the video playing process, at each playing moment, a picture presented in the author field of view is only a part of a panoramic picture (or referred to as a VR picture or an omnidirectional picture) to be presented in an entire video. At different playing moments, spatial information of spatial objects associated with pictures corresponding to author field of views may be different or the same.

After the author designs the author field of view at each playing moment, region information corresponding to the field of view may be encapsulated into a metadata track. After receiving the metadata track, the client may request a video bitstream corresponding to a region carried in the metadata track from a server, and decode the video bitstream. Then, a plot image corresponding to the author field of view may be presented to the user. The server does not need to transmit a bitstream corresponding to a field of view (which is set as a non-author field of view, namely, a static field of view) other than the author field of view to the client, thereby saving resources such as transmission bandwidth for video data.

The author field of view is a field of view corresponding to a picture that is set, by the author based on the plot of the video, to be presented in a preset spatial object, and author spatial objects may be different or the same at different playing moments. Therefore, it may be learned that, the author field of view is a field of view that is constantly changed with a playing moment, and the author spatial object is a dynamic spatial object whose location is constantly changed. That is, locations of author spatial objects corresponding to all playing moments in the panoramic space are not completely the same. The spatial objects shown in FIG. 2 are spatial objects that are obtained through division according to a preset rule and whose relative locations in the panoramic space are fixed. An author spatial object corresponding to any playing moment is not necessarily one of the fixed spatial objects shown in FIG. 2, and is a spatial object whose relative location in global space is constantly changed.

In a possible implementation of the spatial information, the spatial information may include location information of a center point of the spatial object or location information of an upper-left point of the spatial object, and the spatial information may further include a width and a height of the spatial object.

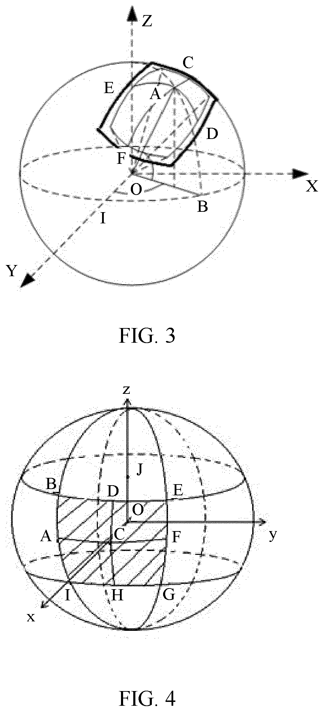

When a coordinate system corresponding to the spatial information is an angular coordinate system, the spatial information may be described by using a yaw angle; or when a coordinate system corresponding to the spatial information is a pixel coordinate system, the spatial information may be described by using a spatial location in a longitude and latitude graph or by using another solid geometric figure. This is not limited herein. If the spatial information is described by using a yaw angle, a pitch (pitch) angle θ, a yaw (yaw) angle ψ, a roll (roll) angle Φ, and the like are used to represent a width and a height of an angle range. FIG. 3 is a schematic diagram of a relative location of a center point of a spatial object in panoramic space. In FIG. 3, a point O is a sphere center corresponding to a 360-degree VR panoramic video spherical picture, and may be considered as a location of human eyes for viewing the VR panoramic picture. A point A is a center point of a target spatial object. C and F are boundary points that are along a horizontal axis of the target spatial object and that pass through the point A, and that are in the target spatial object. E and D are boundary points that are along a vertical axis of the target spatial object, that pass through the point A, and that are in the target spatial object. B is a point to which the point A along a spherical meridian is projected on an equator, and I is a start coordinate point on the equator in a horizontal direction. Elements are described as follows:

The pitch angle is a deflection angle, for example, ∠AOB in FIG. 3, that is in a vertical direction and that is of a point to which a center location of a picture in the target spatial object is mapped in a panoramic spherical (namely, global space) picture.

The yaw angle is a deflection angle, for example, ∠IOB in FIG. 3, that is in a horizontal direction and that is of the point to which the center location of the picture in the target spatial object is mapped in the panoramic spherical picture.

The roll angle is a rotation angle, for example, ∠DOB in FIG. 3, in a direction of a line between the sphere center and a point to which a central location of a picture in a spatial object at the yaw angle is mapped in the panoramic spherical picture.

The pitch angle is used to indicate a height of an angle range (a height of the target spatial object in the angular coordinate system), namely, a height of a field of view of the picture that is in the spatial object and that is in the panoramic spherical picture. The pitch angle is represented by a maximum angle of the field of view in a vertical direction, for example, ∠DOE in FIG. 3. The yaw angle is used to indicate a width of the angle range (a width of the target spatial object in the angular coordinate system), namely, a width of the field of view of the picture that is in the target spatial object and that is in the panoramic spherical picture. The yaw angle is represented by a maximum angle of the field of view in a horizontal direction, for example, ∠COF in FIG. 3.

In another possible implementation of the spatial information, the spatial information may include location information of an upper-left point of the spatial object and location information of a lower-right point of the spatial object.

In still another possible implementation of the spatial information, when the spatial object is not a rectangle, the spatial information may include at least one of a shape type of the spatial object, a radius of the spatial object, and a perimeter of the spatial object.

In some embodiments, the spatial information may include space rotation information of the spatial object.

In some embodiments, the spatial information may be encapsulated in spatial information data or a spatial information track (track). The spatial information data may be a bitstream of video data, metadata of video data, or a file independent of video data. The spatial information track may be a track independent of video data.

In some embodiments, the spatial information may be encapsulated in spatial information metadata (track metadata) of a video. For example, the spatial information is encapsulated in a same box such as a covi box.

In some embodiments, a coordinate system used to describe a width and a height of a target spatial object is shown in FIG. 4. A hatched part on a sphere represents the target spatial object, and vertexes of four angles of the target spatial object are B, E, G, and I. In FIG. 4, O is a sphere center corresponding to a 360-degree VR panoramic video spherical picture, and the vertexes B, E, G, and I are points, on the sphere, of intersection between circles passing through the sphere center (the circles each use the sphere center O as a circle center, radiuses of the circles each are a radius of a sphere corresponding to the 360-degree VR panoramic video spherical picture, the circles pass through a z axis, and there are two circles, where one circle passes through points B, A, I, and O, and the other circle passes through points E, F, G, and O) and circles parallel to an x axis and a y axis (the circles each do not use the sphere center O as a circle center, and there are two circles, where the two circles are parallel to each other, one circle passes through points B, D, and E, and the other circle passes through points I, H, and G). C is a center point of the target spatial object. An angle corresponding to a side DH is represented as the height of the target spatial object, and an angle corresponding to a side AF is represented as the width of the target spatial object. The side DH and the side AF pass through the point C. Angles corresponding to a side BI, a side EG, and the side DH are the same, and angles corresponding to a side BE, a side IG, and the side AF are the same. A vertex of the angle corresponding to the side BE is J, where J is a point of intersection between the z axis and the circle that passes through B, D, and E. Correspondingly, a vertex of the angle corresponding to the side IG is a point of intersection between the z axis and the circle that passes through I, H, and G. A vertex of the angle corresponding to the side AF is the point O, and vertexes of the angles corresponding to the side BI, the side EG, and the side DH each are also the point O.

It should be noted that, the foregoing description is only an example. Alternatively, the target spatial object may be obtained after two large annuluses that pass through the sphere center intersect with two parallel annuluses. Alternatively, the target spatial object may be obtained after two yaw angle annuluses intersect with two pitch angle annuluses. For the yaw angle annuluses, points on the annuluses have a same yaw angle, and for the pitch angle annuluses, points on the annuluses have a same pitch angle. Alternatively, the target spatial object may be obtained after two circles of longitude intersect with two circles of latitude.

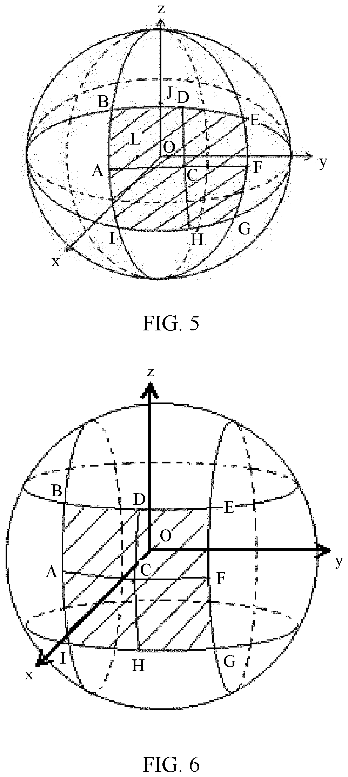

In some embodiments, a coordinate system used to describe a width and a height of a target spatial object is shown in FIG. 5. A hatched part on a sphere represents the target spatial object, and vertexes of four angles of the target spatial object are B, E, G, and I. In FIG. 5, O is a sphere center corresponding to a 360-degree VR panoramic video spherical picture, and the vertexes B, E, G, and I are points, on the sphere, of intersection between circles passing through a z axis (the circles each use the sphere center O as a circle center, radiuses of the circles each are a radius of a sphere corresponding to the 360-degree VR panoramic video spherical picture, and there are two circles, where one circle passes through points B, A, and I, and the other circle passes through points E, F, and G) and circles passing through a y axis (the circles each use the sphere center O as a circle center, radiuses of the circles each are the radius of the sphere corresponding to the 360-degree VR panoramic video spherical picture, and there are two circles, where one circle passes through points B, D, and E, and the other circle passes through points I, H, and G). C is a center point of the target spatial object. An angle corresponding to a side DH is represented as the height of the target spatial object, and an angle corresponding to a side AF is represented as the width of the target spatial object. The side DH and the side AF pass through the point C. Angles corresponding to a side BI, a side EG, and the side DH are the same, and angles corresponding to a side BE, a side IG, and the side AF are the same. A vertex of the angle corresponding to the side BE is J, where J is a point of intersection between the z axis and a circle that passes through the two points B and E and that is parallel to an x axis and the y axis. A vertex of the angle corresponding to the side IG is a point of intersection between the z axis and a circle that passes through the two points I and G and that is parallel to the x axis and the y axis. A vertex of the angle corresponding to the side AF is the point O, and a vertex of the angle corresponding to the side BI is a point L, where the point L is a point of intersection between the y axis and a circle that passes through the two points B and I and that is parallel to the z axis and the x axis. A vertex of the angle corresponding to the side EG is a point of intersection between the y axis and a circle that passes through the two points E and G and that is parallel to the z axis and the x axis. A vertex of the angle corresponding to the side DH is also the point O.

It should be noted that, the foregoing description is only an example. Alternatively, the target spatial object may be obtained after two circles that pass through the x axis intersect with two circles that pass through the z axis. Alternatively, the target spatial object may be obtained after two circles that pass through the x axis intersect with two circles that pass through the y axis. Alternatively, the target spatial object may be obtained after four annuluses that pass through the sphere center intersect.

In some embodiments, a coordinate system used to describe a width and a height of a target spatial object is shown in FIG. 6. A hatched part on a sphere represents the target spatial object, and vertexes of four angles of the target spatial object are B, E, G, and I. In FIG. 6, O is a sphere center corresponding to a 360-degree VR panoramic video spherical picture, and the vertexes B, E, G, and I are points, on the sphere, of intersection between circles parallel to an x axis and a z axis (the circles each do not use the sphere center O as a circle center, and there are two circles, where the two circles are parallel to each other, there are two circles, one circle passes through points B, A, and I, and the other circle passes through points E, F, and G) and circles parallel to the x axis and a y axis (the circles each do not use the sphere center O as a circle center, and there are two circles, where the two circles are parallel to each other, one circle passes through points B, D, and E, and the other circle passes through points I, H, and G). C is a center point of the target spatial object. An angle corresponding to a side DH is represented as the height of the target spatial object, and an angle corresponding to a side AF is represented as the width of the target spatial object. The side DH and the side AF pass through the point C. Angles corresponding to a side BI, a side EG, and the side DH are the same, and angles corresponding to a side BE, a side IG, and the side AF are the same. Vertexes of the angles corresponding to the side BE, the side IG, and the side AF each are the point O, and vertexes of the angles corresponding to the side BI, the side EG, and the side DH each are also the point O.

It should be noted that, the foregoing description is only an example. Alternatively, the target spatial object may be obtained after two circles that are parallel to the y axis and the z axis and that do not pass through the sphere center intersect with two circles that are parallel to the y axis and the x axis and that do not pass through the sphere center. Alternatively, the target spatial object may be obtained after two circles that are parallel to the y axis and the z axis and that do not pass through the sphere center intersect with two circles that are parallel to the z axis and the x axis and that do not pass through the sphere center.

A manner of obtaining the point J and the point L in FIG. 5 is the same as a manner of obtaining the point J in FIG. 4. The vertex of the angle corresponding to the side BE is the point J, and the vertex of the angle corresponding to the side BI is the point L. In FIG. 6, the vertexes corresponding to the side BE and the side BI each are the point O.

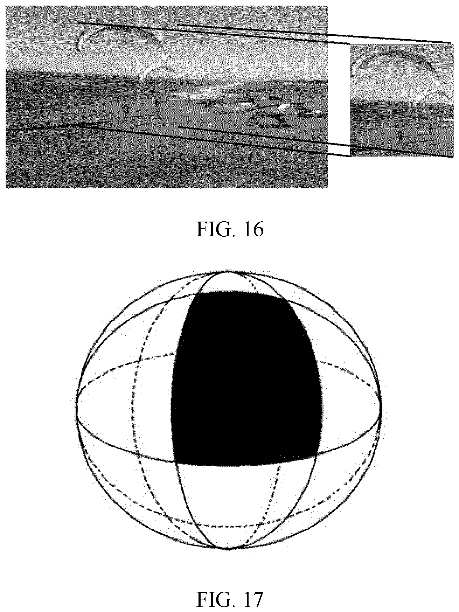

FIG. 16 and FIG. 17 are schematic diagrams of a mapping relationship between a spatial object and video data according to an embodiment of this application. FIG. 16 shows an omnidirectional video (a larger picture on the left) and a sub-region of the omnidirectional video (a smaller picture on the right). FIG. 17 shows video space (a sphere) corresponding to the omnidirectional video and a spatial object (a shaded part on the sphere) corresponding to the sub-region of the omnidirectional video.

A timed metadata track (timed metadata track) of a region (region) on a sphere is specified in an existing OMAF standard. In the metadata track, a metadata box includes metadata that describes the region on the sphere, and a media data box includes information about the region on the sphere. The metadata box describes an intention of the timed metadata track, namely, usage of the region on the sphere. The standard describes two types of timed metadata tracks: a recommended field of view timed metadata track (The recommended viewport timed metadata track) and an initial viewpoint track (the initial viewpoint timed metadata track). The recommended field of view track describes a region of a field of view recommended to a terminal for presentation, and the initial viewpoint track describes an initial presentation direction for viewing an omnidirectional video.

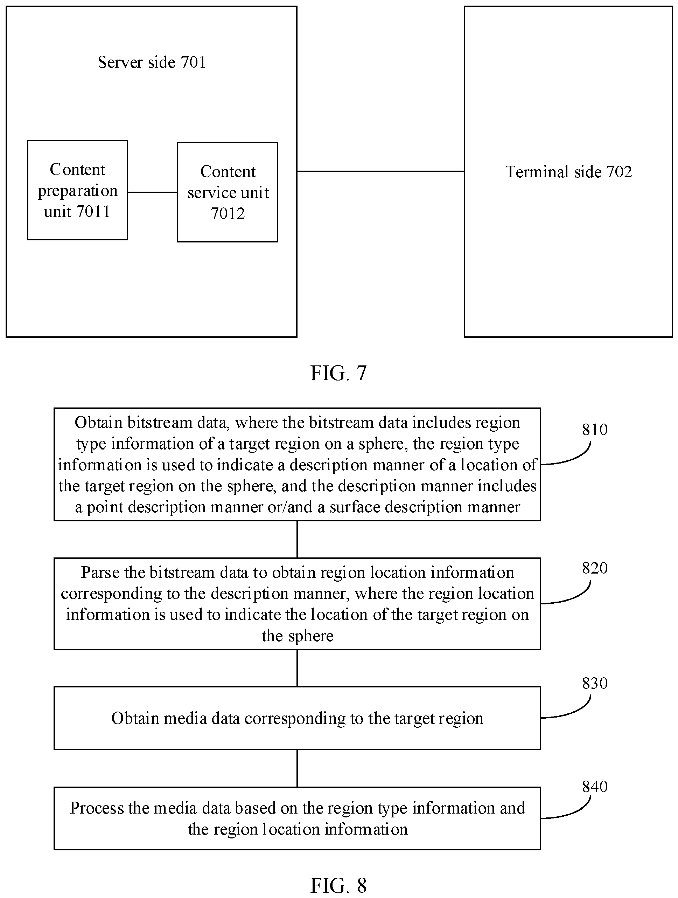

(3) The following describes an application scenario of an embodiment of this application with reference to FIG. 7.

As shown in FIG. 7, a server side 701 includes content preparation 7011 and a content service 7012.

The content preparation unit 7011 may be a media data capture device or a media data transcoder, and is responsible for generating information, such as media content and associated metadata, of streaming media. For example, the content preparation unit 7011 is responsible for compressing, encapsulating, and storing/sending a media file (a video, an audio, or the like). The content preparation unit 7011 may generate metadata information and a file in which a source of metadata is located. The metadata may be encapsulated into a metadata track, or the metadata may be encapsulated in SEI of a video data track. A sample (sample) in the metadata track refers to some regions that are specified by a content generator and that are of an omnidirectional video or some regions that are specified by a content producer and that are of an omnidirectional video. The source of the metadata is encapsulated in the metadata track or carried in an MPD. If the metadata is encapsulated in the SEI, source information of the metadata may be carried in the SEI. In an implementation, the source information of the metadata may indicate that the metadata indicates a viewing region recommended by the content producer or a director.

The content service unit 7012 may be a network node, for example, a content delivery network (Content distribution network, CDN) or a proxy server. The content service unit 7012 may obtain stored or to-be-sent data from the content preparation unit 7011, and forward the data to a terminal side 702. Alternatively, the content service unit 7012 may obtain region information fed back by a terminal from a terminal side 702, generate a region metadata track or region SEI information based on the fed-back information, and generate a file carrying a source of the region information. The generating a region metadata track or region SEI information may be: collecting statistics on fed-back viewing information of regions of the omnidirectional video; selecting one or more most-viewed regions based on the collected statistics to generate a sample of a region that users are interested in; encapsulating the sample in a metadata track or SEI; and encapsulating source information of region metadata in the track, or adding source information of region metadata to an MPD, or adding source information of region metadata to the SEI. This source of the information indicates that region metadata information comes from statistics of a server, and indicates that a region described in the metadata track is a region that most users are interested in. Region information in the region metadata track or region information in the region SEI may alternatively be region information fed back by a user specified by the server. The region metadata track or the region SEI is generated based on the fed-back information, and the source information of the region metadata is carried in the region metadata track or the MPD or the SEI. The source of the region information describes a user that the region metadata comes from.

It may be understood that, the content preparation unit 7011 and the content service unit 7012 may be located on a same hardware device of a server, or may be located on different hardware devices. Both the content preparation unit 7011 and the content service unit 7012 may include one or more hardware devices.

The terminal side 702 may be a virtual reality (Virtual Reality, VR) system (for example, a VR helmet, a VR mobile phone, or a VR set-top box), or may be an augmented reality (Augmented Reality, AR) device. The terminal side 702 is configured to obtain and present media data. In addition, the terminal side 702 obtains region information of content presented by a user in the omnidirectional video. The terminal side 702 feeds back the region information to a content service side 701. Alternatively, the terminal side 702 obtains media data, metadata, and data that carries source information of the metadata. The terminal side 702 parses the source information of the metadata, and parses corresponding metadata based on a source that is of metadata and that is chosen by a terminal user, to obtain region information for media presentation.

With reference to a sample entry and a sample that are encapsulated in the metadata track, the following briefly describes an applicable status of region location information of a target region when a location of the target region on a sphere is described in a point description manner and a surface description manner. It should be noted that, the following focuses parameters related to this embodiment of this application. It should be further understood that, to better enable Chinese to correspond to English and facilitate understanding, the spatial object described above is replaced with a target region in the following.

Syntax of a sample entry (Sample entry) for describing a location of a target region on a sphere is as follows:

```
 class RegionOnSphereSampleEntry(type) extends MetaDataSampleEntry(type) {
            RegionOnSphereConfigBox(); // mandatory
            Box[] other_boxes; // optional
 }
            class RegionOnSphereConfigBox extends FullBox('rosc', version = 0, flags) {
            unsigned int(8) shape_type;
            bit(7) reserved = 0;
            unsigned int(1) dynamic_range_flag;
            if (dynamic_range_flag == 0) {
                 unsigned int(32) static_hor_range;
                 unsigned int(32) static_ver_range;}
            unsigned int(8) num_regions;
 }
```

It can be seen from the syntax of the sample entry that, a region shape type parameter (shape type) of the target region, region range information of the target region (dynamic_range_flag dynamic_range_flag, static_hor_range static_hor_range, and static_ver_range static_ver_range), and the like are described in the sample entry.

dynamic_range_flag indicates a change status of a region range of the target region on the sphere in a horizontal direction and a vertical direction. If dynamic_range_flag == 0, it indicates that the region range of the target region on the sphere in the horizontal direction and the vertical direction is fixed. If dynamic_range_flag == 1, it indicates a change of the region range of the target region on the sphere in the horizontal direction and the vertical direction is described in a sample corresponding to the sample entry.

static_hor_range indicates a horizontal range of the target region on the sphere. static_hor_range in the sample entry indicates a horizontal range of the target region on the sphere when dynamic_range_flag == 0.

static_ver_range indicates a vertical range of the target region on the sphere. static_ver_range in the sample entry indicates a vertical range of the target region on the sphere when dynamic_range_flag == 0.

shape_type indicates a shape of the target region, or may be understood as a determining manner of the target region. For example, when shape type == 0, it may indicate that the target region is determined by using the method shown in FIG. 4; and when shape_type == 1, it may indicate that the target region is determined by using the method shown in FIG. 6. Alternatively, when shape_type == 0, it may indicate that the target region is determined by using the method shown in FIG. 5; and when shape_type == 1, it may indicate that the target region is determined by using the method shown in FIG. 6. Alternatively, when shape_type == 0, it may indicate that the target region is determined by using the method shown in FIG. 4; and when shape_type == 1, it may indicate that the target region is determined by using the method shown in FIG. 5.

Syntax of a sample for describing a location of a target region on a sphere is as follows:

```
              aligned(8) RegionOnSphereStruct(range_included_flag) {
             signed int(32) center_yaw;
             signed int(32) center_pitch;
             singed int(32) center_roll;
            if (range_included_flag) {
                 unsigned int(32) hor_range;
                 unsigned int(32) ver_range;
             }
            unsigned int(1) interpolate;
            bit(7) reserved = 0;
 }
              aligned(8) RegionOnSphereSample() {
            for (i = 0; i < num_regions; i++)
                 RegionOnSphereStruct(dynamic_range_flag)}
```

It can be seen from the syntax of the sample that, location information of a center point of the target region (a yaw angle center_yaw, a pitch angle center_pitch, and a roll angle center_roll), region range information of the target region (a horizontal range of the region hor_range, and a vertical range of the region ver_range), and the like are described in the sample.

hor_range indicates a horizontal range of the target region on the sphere. When dynamic_range_flag == 1 in the sample entry, hor_range in this sample may be used to indicate a horizontal range of the target region on the sphere.

ver_range indicates a vertical range of the target region on the sphere. When dynamic range_flag == 1 in the sample entry, ver_range in this sample may be used to indicate a vertical range of the target region on the sphere.

Based on the syntax of the sample entry for describing the location of the target region on the sphere and the syntax of the sample for describing the location of the target region on the sphere, when a description manner of the target region uses the point description manner, dynamic range_flag == 0, static_hor_range == 0, and static_ver_range == 0. When a description manner of the target region uses the surface description manner, the location information of the center point in the target region, static_hor_range, and static_ver_range are meaningful or valid, and static_hor_rang and static_ver_range are non-zero values.

In conclusion, whether the description manner of the target region uses the point description manner or the surface description manner, same sample entry syntax and same sample syntax are used. A terminal needs to obtain the location information of the center point in the target region, static_hor_range, and static_ver_range from the sample entry and the sample. To be specific, when the target region is described by using the point description manner, even if static_hor_range == 0 and static_ver_range == 0, a decoding end (for example, the terminal side 702) still needs to obtain, from a sample included in bitstream data, information that is invalid for determining the location of the target region on the sphere.

Therefore, the foregoing method for obtaining the region location information for indicating the location of the target region on the sphere is relatively fixed and not flexible enough, and increases a delay of obtaining the region location information.

To resolve the foregoing problem, the following describes in detail a schematic flowchart of a media data processing method according to an embodiment of this application with reference to FIG. 8. It should be understood that the method shown in FIG. 8 may be performed by a device having a decoding function, for example, the terminal side 702 shown in FIG. 7.

810: Obtain bitstream data, where the bitstream data includes region type information, the region type information is used to indicate a description manner of a location of a target region on a sphere, and the description manner includes a point description manner or a surface description manner.

Optionally, the bitstream data is a media data track.

Specifically, when the bitstream data is the media data track, the region type information is located in the media data track.

Optionally, the region type information is located in SEI of the media data track.

The following table lists feasible syntax of the SEI in which the region type information is located.

| sei_payload(payloadType, payloadSize) { | Descriptor |
|---|---|
| if(payloadType = = REG) | |
| region_payload(payloadSize) | |
| } | |

If a payload type (payloadType) in the SEI is REG, syntax in the SEI is as follows:

| region_payload(payloadSize) { | Descriptor |
|---|---|
| region_type | |
| If(region_type ==0){ | |
| center_yaw | |
| center_pitch | |
| center_roll | |
| } | |
| If(region_type == 1){ | |
| Shape_type | |
| center_yaw | |
| center_pitch | |
| center_roll | |
| hor_range | |
| ver_range | |
| } | |
| } | |

It can be seen from the feasible syntax of the SEI that, the region type information of the target region (region_type) is added to the SEI. When a description type used by the target region is the point description manner, that is, region_type == 0, the region location information of the target region in the SEI is only location information of a center point (center_yaw, center_pitch, and center_roll). When a description type used by the target region is the surface description manner, that is, region_type == 1, the region location information of the target region in the SEI includes location information of a central point (center_yaw, center_pitch, and center_roll), and range information of the target region: a horizontal range of the target region (hor_range) and a vertical range of the target region (ver_range).

Optionally, the bitstream data is a metadata track.

Specifically, when the bitstream data is the metadata track, the region type information is located in the metadata track.

The following lists feasible syntax of a sample entry and feasible syntax of a sample in the metadata track in which the region type information is located.

Syntax of a sample entry 1:

```
 class RegionOnSphereConfigBox extends FullBox('rosc', version = 0, flags) {
            unsigned int(8) region_type;
            if (region_type == 1)
             {
                 unsigned int(8) shape_type;
                 bit(7) reserved = 0;
                 unsigned int(1) dynamic_range_flag;
                     if (shape_type ==0∥ shape_type ==1)
                     {
                          if (dynamic_range_flag == 0) {
                         unsigned int(32) static_hor_range;
                         unsigned int(32) static_ver_range;
                     }
                     }
             }
            unsigned int(8) num_regions;}
```

The region type information (region type) of the target region is added to the sample entry, and is used to indicate the description manner of the location of the target region on the sphere. region_type == 0 is used to indicate that the description manner of the target region uses the point description manner. region_type == 1 is used to indicate that the description manner of the target region uses the surface description manner.

Syntax of a sample syntax 1 corresponding to the sample entry 1:

```
              aligned(8) RegionOnSphereStruct(range_included_flag, region type) {
             signed int(32) center_yaw;
             signed int(32) center_pitch;
             singed int(32) center roll;
                 if (region_type==1) {
                     if (range_included_flag) {
                 unsigned int(32) hor_range;
                 unsigned int(32) ver_range;
                 }
 }
            unsigned int(1) interpolate;
            bit(7) reserved = 0;
 }
           aligned(8) RegionOnSphereSample() {
            for (i = 0; i < num_regions; i++)
                 RegionOnSphereStruct(dynamic_range_flag, region type)
                 if(region_type==0)
                 {
                      unsigned int(1) refresh flag;
            bit(7) reserved = 0;
            }
 }
```

With reference to the sample entry 1 and the sample 1, it can be seen that if region_type == 0, to be specific, when the description manner of the target region uses the point description manner, the region location information that needs to be obtained from the sample entry and the sample and that is of the target region includes location information of a center point of the target region: center_yaw, center_pitch, and center_roll. If region_type == 1, to be specific, when the description manner of the target region uses the surface description manner, the region location information that needs to be obtained from the sample entry and the sample and that is of the target region includes location information of a center point of the target region: center_yaw, center_pitch, and center_roll, and region range information of the target region: hor_range and ver_range.

Optionally, the bitstream data includes a shape type parameter of the target region, and a value of the shape type parameter indicates the region type information.

Specifically, that the value of the shape type parameter indicates the region type information may mean that the value of the shape type parameter implicitly indicates the region type information. For example, in the prior art, the value of the shape type parameter may be 0 or 1, and different values indicate different region shapes. In this embodiment of this application, a new value (for example, 2) may be added for the shape type parameter, and is used to indicate the region type information. To be specific, when the value of the shape type parameter is 0 or 1, the value of the shape type parameter may be used to indicate that a description manner of the target region uses the surface description manner. When the value of the shape type parameter is the new value (for example, 2), the value of the shape type parameter may be used to indicate that a description manner of the target region uses the point description manner.

It should be noted that the shape type parameter may be a shape type parameter located in the metadata track, or may be a shape type parameter located in the SEI.

The following lists feasible syntax of a sample entry and feasible syntax of a sample in the metadata track when the region type information is indicated by using a value of region shape (shape_type) information, and lists corresponding syntax of the SEI.

Syntax of a sample entry 2:

```
 class RegionOnSphereConfigBox extends FullBox('rosc', version = 0, flags) {
            unsigned int(8) shape_type;
            if(shape_type ==0)∥ (shape_type ==1))
             {
                 bit(7) reserved = 0;
                 unsigned int(1) dynamic_range_flag;
                     if(shape_type ==0∥ shape_type ==1)
                     {
                          if (dynamic_range_flag == 0) {
                         unsigned int(32) static_hor_range;
                         unsigned int(32) static_ver_range;
                     }
             }
 }
 unsigned int(8) num_regions;}
```

In the syntax of the sample entry 2, the region shape type (shape_type) information is used to indicate the region type information of the target region. shape_type == 0 or shape_type == 1 is used to indicate that a description manner of the target region uses the surface description manner. shape_type == 2 is used to indicate that the description manner of the target region uses the point description manner.

Syntax of a sample 2 corresponding to the sample entry 2:

```
              aligned(8) RegionOnSphereStruct(range_included_flag, shape type) {
             signed int(32) center_yaw;
             signed int(32) center_pitch;
             singed int(32) center_roll;
              if(shape_type ==0)∥ (shape_type ==1))
             {
                  if (range_included_flag) {
                 unsigned int(32) hor range;
                 unsigned int(32) ver_range;
                 }
             }
            unsigned int(1) interpolate;
            bit(7) reserved = 0;
             aligned(8) RegionOnSphereSample() {
            for (i = 0; i < num_regions; i++)
                 RegionOnSphereStruct(dynamic_range_flag,shape_type)
                 if(shape_type ==2)
                 {
                     unsigned int(1) refresh flag;
            bit(7) reserved = 0;
                }
          }
```

With reference to the sample entry 2 and the sample 2, it can be seen that if region_type == 2, to be specific, when the description manner of the target region uses the point description manner, the region location information that needs to be obtained from the sample entry and the sample and that is of the target region includes location information of a center point of the target region: center_yaw, center_pitch, and center_roll. If region_type == 0 or region_type == 1, to be specific, when the description manner of the target region uses the surface description manner, the region location information that needs to be obtained from the sample entry and the sample and that is of the target region includes location information of a center point of the target region: center_yaw, center_pitch, and center_roll, and region range information of the target region: hor_range and ver range.

Correspondingly, for feasible syntax of SEI corresponding to the syntax of the sample entry 2 and the syntax of the sample 2, refer to the following table:

| region_payload(payloadSize) { | Descriptor |
|---|---|
| shape_type | |
| If(shape_type ==2){ | |
| center_yaw | |
| center_pitch | |
| center_roll | |
| } | |
| If((shape_type ==0)∥(shape_type ==1)){ | |
| center_yaw | |
| center_pitch | |
| center_roll | |
| hor_range | |
| ver_range | |
| } | |
| } | |

If shape type == 2, to be specific, when the description manner of the target region uses the point description manner, the region location information that needs to be obtained from the SEI and that is of the target region includes location information of a center point of the target region: center_yaw, center_pitch, and center_roll. If shape_type == 0 or shape_type == 1, to be specific, when the description manner of the target region uses the surface description manner, the region location information that needs to be obtained from the SEI and that is of the target region includes location information of a center point of the target region (center_yaw, center_pitch, and center_roll) and region range information of the target region (hor range and ver_range).

820: Parse the bitstream data to obtain region location information corresponding to the description manner, where the region location information is used to indicate the location of the target region on the sphere.

Specifically, the region location information includes location information of a center point of the target region and region range information of the target region, where the location information of the center point of the target region may be represented by coordinates of the center point on the sphere, and the region range information of the target region may be represented by a horizontal range of the target region on the sphere and a vertical range of the target region on the sphere.

Optionally, in an embodiment, if the description manner is the point description manner, step 820 includes: parsing the bitstream data to obtain region location information corresponding to the point description manner, where the region location information corresponding to the point description manner is the location information of the location of the center point of the target region.

Optionally, in an embodiment, if the description manner is the surface description manner, step 820 includes: parsing the bitstream data to obtain region location information corresponding to the surface description manner, where the region location information corresponding to the surface description manner includes the location information of the center point of the target region and the region range information of the target region.

830: Obtain media data corresponding to the target region.

Specifically, if the bitstream data is a media data track, the obtaining media data corresponding to the target region may be obtaining media data corresponding to the target region from the bitstream data. If the bitstream data is a metadata track, the obtaining media data corresponding to the target region may be obtaining media data corresponding to the target region from a media data track corresponding to the metadata track.

840: Process the media data based on the region type information and the region location information.

In this embodiment of this application, the region location information that needs to be obtained by parsing the bitstream data and that corresponds to the description manner may be determined based on the region type information included in the bitstream data. To be specific, the region location information may be obtained, based on the description manner of the target region, selectively by parsing the bitstream. This avoids a case in which all region location information of the target region needs to be parsed from the bitstream data in the prior art. This application helps improve flexibility of obtaining region location information of a target region.

Further, obtaining region location information corresponding to the description manner helps to reduce a delay of obtaining region location information of a target region.

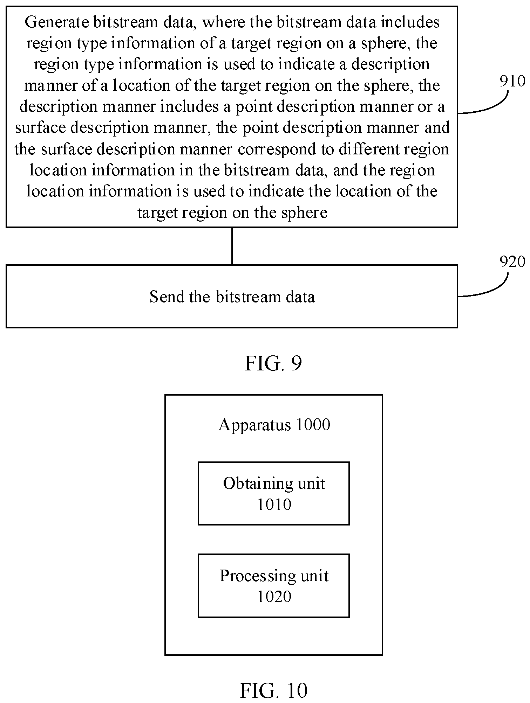

FIG. 9 is a schematic flowchart of a media data processing method according to an embodiment of this application. It should be understood that the method shown in FIG. 9 may be performed by a server, for example, the content preparation unit 7011 or the content service unit 7012 shown in FIG. 7.

910: Generate bitstream data, where the bitstream data includes region type information of a target region on a sphere, the region type information is used to indicate a description manner of a location of the target region on the sphere, the description manner includes a point description manner or a surface description manner, the point description manner and the surface description manner correspond to different region location information in the bitstream data, and the region location information is used to indicate the location of the target region on the sphere.

Specifically, that the point description manner and the surface description manner correspond to different region location information in the bitstream data may be that different description manners correspond to different region location information. For example, when the description manner is the point description manner, region location information corresponding to the point description manner includes location information of a central point of the target region. When the description manner is the surface description manner, region location information corresponding to the surface description manner includes location information of a center point of the target region and region range information of the target region.

Optionally, the bitstream data is a media data track.

Optionally, the region type information is located in supplemental enhancement information SEI of the media data track.

Optionally, the bitstream data is a metadata track.

Optionally, the bitstream data includes a shape type parameter of the target region, and a value of the shape type parameter indicates the region type information.

920: Send the bitstream data.

Specifically, the bitstream data is sent to a decoding device, where the decoding device may be the terminal side 702 shown in FIG. 7.

The foregoing describes in detail the media data processing method in the embodiments of this application with reference to FIG. 1 to FIG. 9. The following describes in detail a media data processing apparatus in the embodiments of this application with reference to FIG. 10 to FIG. 12. It should be understood that apparatuses shown in FIG. 10 to FIG. 12 may implement steps in FIG. 1 to FIG. 9. Details are not described herein to avoid repetition.

FIG. 10 is a schematic block diagram of a media data processing apparatus according to an embodiment of this application. An apparatus 1000 shown in FIG. 10 includes an obtaining unit 1010 and a processing unit 1020.

The obtaining unit is configured to obtain bitstream data, where the bitstream data includes region type information, the region type information is used to indicate a description manner of a location of a target region on a sphere, and the description manner includes a point description manner or a surface description manner.

The obtaining unit is further configured to parse the bitstream data to obtain region location information corresponding to the description manner, where the region location information is used to indicate the location of the target region on the sphere.

The obtaining unit is further configured to obtain media data corresponding to the target region.

The processing unit is configured to process the media data based on the region type information and the region location information that are obtained by the obtaining unit.

Optionally, the bitstream data is a media data track.

Optionally, the region type information is located in supplemental enhancement information SEI of the media data track.

Optionally, the bitstream data is a metadata track.

Optionally, the bitstream data includes a shape type parameter of the target region, and a value of the shape type parameter indicates the region type information.

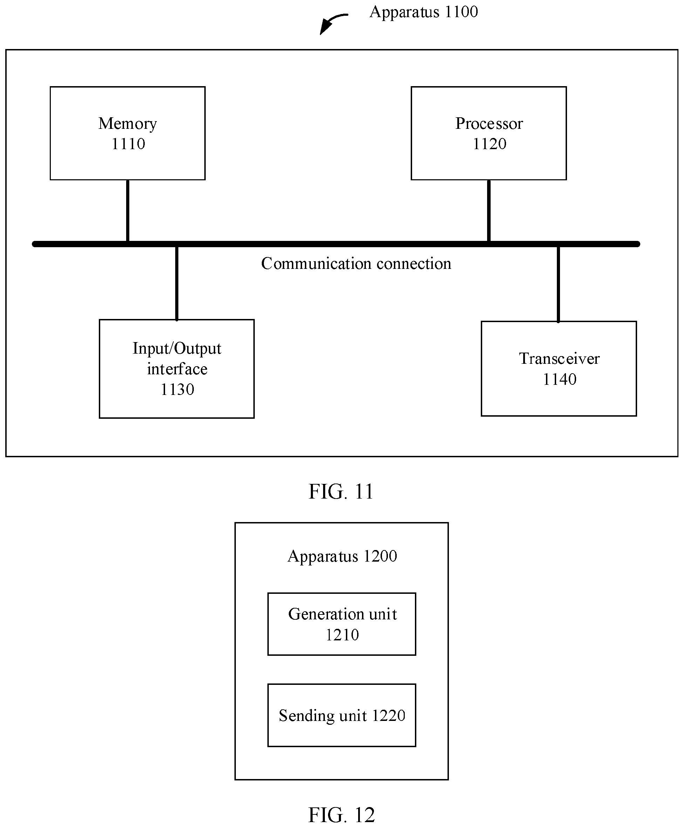

In an optional embodiment, the processing unit may be a processor 1120, the obtaining unit may be a transceiver 1140, and the apparatus may further include an input/output interface 1130 and a memory 1110. Refer to FIG. 11 for details.

FIG. 11 is a schematic block diagram of an apparatus according to another embodiment of this application. An apparatus 1100 shown in FIG. 11 may include a memory 1111, a processor 1120, an input/output interface 1130, and a transceiver 1140. The memory 1111, the processor 1120, the input/output interface 1130, and the transceiver 1140 are connected through an internal connection path. The memory 1111 is configured to store an instruction. The processor 1120 is configured to execute the instruction stored in the memory 1110, to control the input/output interface 1130 to receive input data and information and to output data such as an operation result, and control the transceiver 1140 to send a signal.

It should be understood that, in this embodiment of this application, the processor 1120 may use a general-purpose central processing unit (Central Processing Unit, CPU), a microprocessor, an application-specific integrated circuit (Application Specific Integrated Circuit, ASIC), or one or more integrated circuits. The processor 1120 is configured to execute a related program, so as to implement the technical solutions provided in the embodiments of this application.

It should be further understood that the transceiver 1140 is also referred to as a communications interface, and a transceiving apparatus, for example, but not limited to a transceiver is used to implement communication between a terminal 1100 and another device or communications network.

The memory 1111 may include a read-only memory and a random access memory, and provide an instruction and data to the processor 1120. A part of the processor 1120 may further include a non-volatile random access memory. For example, the processor 1120 may further store information about a device type.

In an implementation process, steps in the foregoing method can be implemented by using a hardware integrated logic circuit in the processor 1120, or by using instructions in a form of software. The media data processing method disclosed with reference to the embodiments of this application may be directly performed by a hardware processor, or may be performed by using a combination of hardware and software modules in the processor. A software module may be located in a mature storage medium in the art, such as a random access memory, a flash memory, a read-only memory, a programmable read-only memory, an electrically erasable programmable memory, or a register. The storage medium is located in the memory 1110. The processor 1120 reads information in the memory 1110 and completes the steps in the foregoing methods in combination with hardware of the processor. Details are not described herein to avoid repetition.

It should be understood that, in this embodiment of this application, the processor may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA), or another programmable logic device, a discrete gate or a transistor logic device, a discrete hardware component, or the like. The general-purpose processor may be a microprocessor, or the processor may be any conventional processor or the like.

FIG. 12 is a schematic block diagram of a media data processing apparatus according to an embodiment of this application. The apparatus shown in FIG. 12 includes a generation unit 1210 and a sending unit 1220.

The generation unit is configured to generate bitstream data, where the bitstream data includes region type information of a target region on a sphere, the region type information is used to indicate a description manner of a location of the target region on the sphere, the description manner includes a point description manner or a surface description manner, the point description manner and the surface description manner correspond to different region location information in the bitstream data, and the region location information is used to indicate the location of the target region on the sphere.

The sending unit is configured to send the bitstream data generated by the generation unit.

Optionally, the bitstream data is a media data track.

Optionally, the region type information is located in supplemental enhancement information SEI of the media data track.

Optionally, the bitstream data is a metadata track.

Optionally, the bitstream data includes a shape type parameter of the target region, and a value of the shape type parameter indicates the region type information.

In an optional embodiment, the generation unit may be the processor 1120, the sending unit may be the transceiver 1140, and the apparatus may further include the input/output interface 1130 and the memory 1110. Refer to FIG. 11 for details.

In the prior art, because a client (which may be the terminal side 702 in the foregoing) cannot accurately identify a source of data, when selecting media data based on metadata, the client cannot fully meet a requirement of a user. This results in poor user experience.

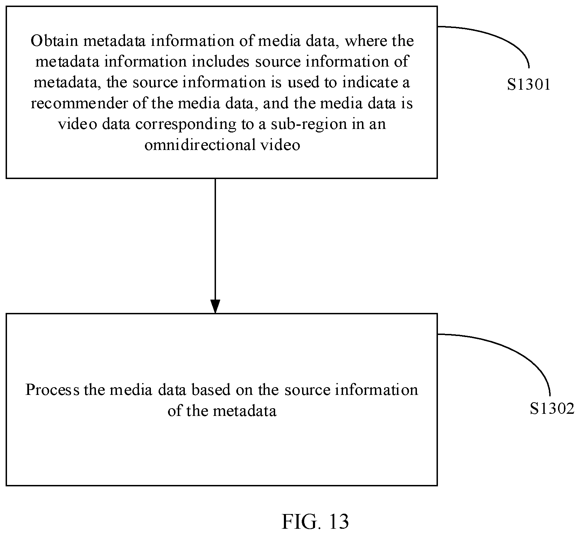

As shown in FIG. 13, in an embodiment of an aspect of this application, a media information processing method S130 is disclosed. The method S130 includes the following steps.

S1301: Obtain metadata information of media data, where the metadata information includes source information of metadata, the source information is used to indicate a recommender of the media data, and the media data is video data corresponding to a sub-region in an omnidirectional video.

S1302: Process the media data based on the source information of the metadata.

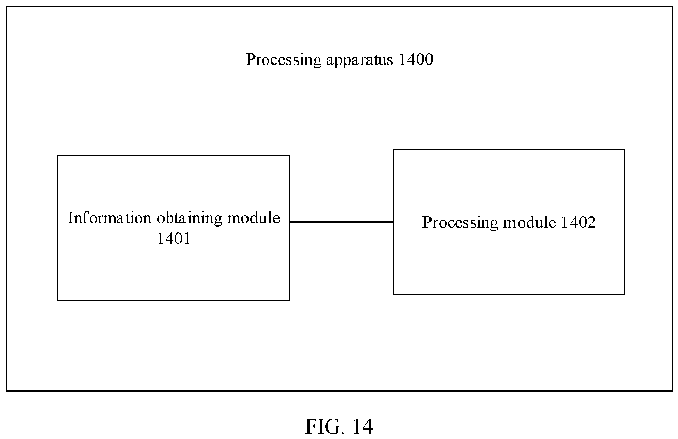

As shown in FIG. 14, in an embodiment of an aspect of this application, a media information processing apparatus 1400 is disclosed. The apparatus 1400 includes an information obtaining module 1401 and a processing module 1402. The information obtaining module 1401 is configured to obtain metadata information of media data. The metadata information includes source information of metadata, the source information is used to indicate a recommender of the media data, and the media data is video data corresponding to a sub-region in an omnidirectional video. The processing module 902 is configured to process the media data based on the source information of the metadata.

In an implementation of this embodiment of this application, the source information of the metadata is carried in a metadata track.

In the metadata track, one box is newly added for describing a source of sample data in the metadata track, and a source of the track is described in the box. In this embodiment, a format of the newly-added box is as follows:
SourcelnformationBox extends Box('sinf) { Unsigned int(8) source_type;//indicating a source of metadata: presetting by a director/pre-collected statistics/a popular person}

In this example, source_type describes source information of the track in which the box is located. When source type is equal to 0, it indicates that region information in the track is recommended by a video producer, for example, it indicates that region information in the track comes from a field of view recommended by the director. A terminal side may present, to a user by using the information in the track, media content that the director expects to present to the user. When source_type is equal to 1, it indicates that region information in the track is a region that most users are interested in. A terminal side may present, to a user by using the information in the track, the region that most users are interested in and that is in omnidirectional media. When source_type is equal to 2, it indicates that region information in the track is a region for a terminal user to view omnidirectional media. A terminal side may reproduce a field of view for a user to view the omnidirectional media.

It may be understood that, the foregoing type is only an example used to help understand this embodiment of this application, but not a specific limitation. A value of the type may be another value, or may be used to represent another source type.

A procedure of processing the information in the metadata track obtained on the terminal side is as follows:
1. A terminal obtains the metadata track, parses a metadata box (moov box) in the metadata track, and parses the box to obtain a sinf box.
2. The terminal parses the sinf box to obtain source-type information. When source_type is equal to 0, the region information in the track is recommended by the video producer. When source_type is equal to 1, the region information in the track is a region that most users are interested in. When source type is equal to 2, the region information in the track is the region for the terminal user to view the omnidirectional media. It is assumed that source_type in the metadata obtained by the terminal is equal to 0.
3. The terminal presents a source of the information to a user and accepts a choice of the user.
4. If the user chooses to view in a field of view recommended by the video producer or the director, the terminal parses a sample in the metadata track to obtain the region information, and presents media that corresponds to an obtained region and that is in the omnidirectional media to the user.

The source information of the metadata is carried in the metadata track. The source information indicates that the metadata comes from an omnidirectional video producer, or a user that views an omnidirectional video, or data of a field of view that the users are interested in and that is obtained through statistics collection. Alternatively, a purpose of the metadata described by the information is that the metadata comes from a recommendation of an omnidirectional video producer, or a recommendation of a user that views the omnidirectional video, or a recommendation based on data that is obtained by collecting statistics on a used field of view. When receiving region metadata, a client may distinguish metadata from different sources. If there are a plurality of pieces of region metadata, the user may choose a recommended region to view based on a personal requirement.

In an implementation of this application, the source information of the metadata is carried in an MPD.

A source information descriptor is added to a standard element Supplemental Property/Essential Property specified in ISO/IEC 23009-1, where a scheme of the descriptor is ="urn:mpeg:dash:purpose", indicating that the descriptor provides a source of information in a representation in an MPD. A value of the descriptor is described in the following table.

| @value parameter for source descriptor | Use | Description (Description) |
|---|---|---|
| source_type | M | source_type describes source information in the representation. When source type is equal to 0, region information in a representation is recommended by a video producer, for example, the region information in the representation comes from a field of view recommended by the director. A terminal side may present, to a user by using the information in the representation, media content that the director expects to present to the user. When source type is equal to 1, region information in a representation is a region that most users are interested in. A terminal side may present, to a user by using the information in the representation, a region that most users are interested in and that is in omnidirectional media. When source type is equal to 2, region information in a representation is a region for a terminal user to view omnidirectional media. A terminal side may reproduce a field of view for a user to view the omnidirectional media. |

The foregoing descriptor may be in an adaptationSet element of the MPD or a representation element of the MPD. In the following specific example, the descriptor is in the representation element.

```
               <?xml version="1.0" encoding="UTF-8"?>
           <MPD
             xmlns="urn:mpeg:dash:schema:mpd:2011"
             type=" static"
             mediaPresentationDuration="PT10S"
             minBufferTime="PT1S"
             profiles="urn:mpeg:dash:profile:isoff-on-demand:2011">
             <Period>
               <!-Metadata track-->
               <AdaptationSet segmentAlignment="true"
               subsegmentAlignment="true" subsegmentStartsWithSAP="1">
                  <Representationid="metadata" ... bandwidth="100">
                      <EssentialProperty schemeIdUri=" urn:mpeg:dash:purpose "
                      value="0"/>
                      <BaseURL> metadata.mp4</BaseURL>
                    <SegmentBase indexRangeExact="true" indexRange="837-
                    988"/>
                  </Representation>
               </ AdaptationSet>
             </Period>
           </MPD>
```

In this example, source information in the representation is described by using the descriptor. Alternatively, one attribute may be added to the adaptationSet element or the representation element to describe a source of the representation. For example, the attribute is sourceType. When source_type is equal to 0, region information in a representation is recommended by a video producer, for example, the region information in the representation comes from a field of view recommended by the director. A terminal side may present, to a user by using the information in the representation, media content that the director expects to present to the user. When source_type is equal to 1, region information in a representation is a region that most users are interested in. A terminal side may present, to a user by using the information in the representation, a region that most users are interested in and that is in omnidirectional media. When source_type is equal to 2, region information in a representation is a region for a terminal user to view omnidirectional media. A terminal side may reproduce a field of view for a user to view the omnidirectional media.

An example of the MPD is as follows:

```
               <?xml version="1.0" encoding="UTF-8"?>
           <MPD
             xmlns="urn:mpeg:dash:schema:mpd:2011"
             type=" static"
             mediaPresentationDuration="PT10S"
             minBufferTime="PT1S"
             profiles="urn:mpeg:dash:profile:isoff-on-demand:2011">
             <Period>
               <!-Metadata track-->
               <AdaptationSet segmentAlignment="true"
               subsegmentAlignment="true" subsegmentStartsWithSAP="1">
                  <Representationid="metadata" bandwidth=" 100"
                  soureceType="0">
                      <BaseURL> metadata.mp4</BaseURL>
                  <SegmentBase indexRangeExact="true" indexRange="837-988"/>
                  </Representation>
               </AdaptationSet>
             </Period>
           </MPD>
```

In the foregoing two examples of the MPD, the descriptor and the attribute are respectively used to indicate that region information in a metadata.mp4 file described by the representation is recommended by the video producer.

A procedure of processing the information in the examples obtained on the terminal side is as follows:
1. A terminal obtains and parses an MPD file, and if an adaptationSet element or a representation element obtained after parsing includes a descriptor whose scheme is urn:mpeg:dash:purpose, parses a value of the descriptor.
2. If the value is equal to 0, region information in the representation is recommended by the video producer. If the value is equal to 1, region information in the representation is the region that most users are interested in. If the value is equal to 2, region information in the representation is the region for the terminal user to view the omnidirectional media. It is assumed that the value in an MPD obtained by the terminal is equal to 0.
3. The terminal presents a source of the information to a user and accepts a choice of the user.
4. If the user chooses to view in a field of view recommended by the video producer or the director, the terminal constructs a request for a segment in the representation based on the information in the MPD to obtain the segment, parses region information of the segment to obtain the region information, and presents media that corresponds to an obtained region and that is in the omnidirectional media to the user.

In an embodiment of this application, the source information of the metadata is carried in SEI.

For example:

| sei_payload( payloadType, payloadSize) { ) { | Descriptor |
|---|---|
| if(payloadType = = SRC) | |
| source_payload(payloadSize) | |
| } | |

SRC in the foregoing syntax represents a specific value, for example, 190. This is not limited herein. When a payload type of the SEI is SRC, syntax of the SEI is described in the following table.

| source_payload(payloadSize) { | Descriptor |
|---|---|
| source_type | |
| } | |

source_type in this load describes source information of region information described by the SEI. When source_type is equal to 0, it indicates that the region information described by the SEI is recommended by a video producer, for example, it indicates that the region information described by the SEI comes from a field of view recommended by the director. A terminal side may present, to a user by using the region information described by the SEI, media content that the director expects to present to the user. When source_type is equal to 1, it indicates that the region information described by the SEI is a region that most users are interested in. A terminal side may present, to a user by using the region information, a region that most users are interested in and that is in omnidirectional media. When source_type is equal to 2, it indicates that the region information described by the SEI is a region for a terminal user to view omnidirectional media. A terminal side may reproduce a field of view for a user to view the omnidirectional media.

A procedure of processing the video bitstream obtained on the terminal side is as follows:
1. A terminal obtains the video bitstream, parses NALU header information in the bitstream, and if header information type obtained after parsing is a SEI type, parses a SEI NALU to obtain a payload type of the SEI.
2. If the payload type obtained after parsing is 190, it indicates that source information of region metadata is carried in the SEI. The terminal continues parsing to obtain source-type information. When source_type is equal to 0, region information in the track is recommended by the video producer. When source_type is equal to 1, region information in the track is a region that most users are interested in. When source_type is equal to 2, region information in the track is a region for a terminal user to view omnidirectional media. It is assumed that source_type, obtained by the terminal, in the SEI is equal to 0.
3. The terminal presents a source of the information to a user and accepts a choice of the user.
4. If the user chooses to view in a field of view recommended by the video producer or a director, the terminal parses region information in the video bitstream to obtain the region information, and presents media that corresponds to an obtained region and that is in the omnidirectional media to the user.

In an embodiment of this application, in addition to the types of the source information that are listed in the foregoing embodiments, semantics of the source information may further be extended.

For example:
1. Syntax extension in a metadata track:
   SourcelnformationBox extends Box('sinf) { unsigned int(5)[3] language; // ISO-639-2/T language code string sourceDescription;}

### Semantics:

Language: indicates a language of a subsequent character string. This value uses language codewords in ISO-639-2/T to represent various languages.

sourceDescription: is a character string and specifies content of a source of region metadata. sourceDescription specifies a description of the source. For example, this value may be "a director's cut", indicating that the metadata comes from an author or is recommended by an author. Alternatively, this value may be "Tom", indicating that the metadata comes from Tom or is recommended by Tom.

### 2. Extension in an MPD:

| @value parameter for source descriptor | Use | Description |
|---|---|---|
| language | O | Indicates a language of a subsequent character string. This value uses language codewords in ISO-639-2/T to represent various languages. |
| sourceDescription | O | Is a character string and specifies content of a source of region metadata or a purpose. sourceDescription specifies a description of the source or a description of the purpose. For example, this value may be "a director's cut", indicating that the metadata comes from an author or is recommended by an author. Alternatively, this value may be "Tom", indicating that the metadata comes from Tom or is recommended by Tom. |

### 3. Extension in SEI: (semantics of syntax is the same as the foregoing semantics)

| source_payload(payloadSize) { | Descriptor |
|---|---|
| language | |
| sourceDescription | |
| } | |

In an embodiment of this application, in addition to the types of the source information that are listed in the foregoing embodiments, semantics of the source information may further be extended.

For example:
1. Syntax extension in a metadata track:
   SourcelnformationBox extends Box('sinf') { Int(64) data;}

### Semantics:

Data: specifies a time, for example, Mon, 04 Jul 2011 05:50:30 GMT at which the metadata track is generated.

### 2. Extension in an MPD:

| @value parameter for source descriptor | Use | Description |
|---|---|---|
| Date | O | Specifies a time, for example, Mon, 04 Jul 2011 05:50:30 GMT at which the metadata track is generated. |

3. Extension in SEI: (semantics of syntax is the same as the foregoing semantics)

| source_payload(payloadSize) { | Descriptor |
|---|---|
| Date | |
| } | |

In an embodiment of this application, information about a purpose/a source of the metadata may alternatively be represented by a sample entry type. For example, a sample entry type of a region that most users are interested in may be 'mroi', a recommendation of a user may be 'proi', and a recommendation of an author or a director may be 'droi'.

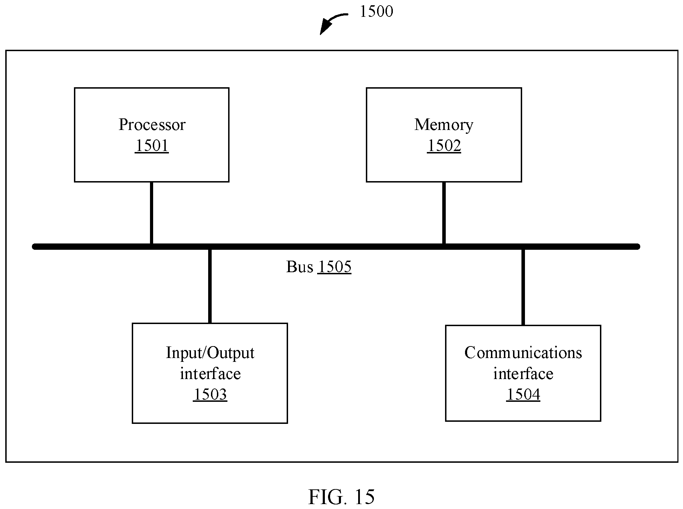

FIG. 15 is a schematic diagram of a hardware structure of a computer device 1500 according to an embodiment of this application. As shown in FIG. 15, the computer device 1500 may be used as an implementation of a streaming media information processing apparatus, or an implementation of a streaming media information processing method. The computer device 1500 includes a processor 1501, a memory 1502, an input/output interface 1503, and a bus 1505, and may further include a communications interface 1504. The processor 1501, the memory 1502, the input/output interface 1503, and the communications interface 1504 are communicatively connected to each other by using the bus 1505.

The processor 1501 may use a general-purpose central processing unit (Central Processing Unit, CPU), a microprocessor, an application-specific integrated circuit (Application Specific Integrated Circuit, ASIC), or one or more integrated circuits. The processor 1501 is configured to execute a related program, so as to implement a function that needs to be performed by a module in the streaming media information processing apparatus provided in the embodiments of this application, or perform the streaming media information processing method corresponding to the method embodiments of this application. The processor 1501 may be an integrated circuit chip and has a signal processing capability. In an implementation process, steps in the foregoing method can be implemented by using a hardware integrated logic circuit in the processor 1501, or by using instructions in a form of software. The processor 1501 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 1501 may implement or perform the methods, the steps, and logical block diagrams that are disclosed in the embodiments of this application. The general-purpose processor may be a microprocessor, or the processor may be any conventional processor or the like. The steps of the method disclosed with reference to the embodiments of this application may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1502. The processor 1501 reads information in the memory 1502, and performs, with hardware of the processor 1501, the function that needs to be performed by the module included in the streaming media information processing apparatus provided in the embodiments of this application, or performs the streaming media information processing method provided in the method embodiments of this application.

The memory 1502 may be a read-only memory (Read Only Memory, ROM), a static storage device, a dynamic storage device, or a random access memory (Random Access Memory, RAM). The memory 1502 may store an operating system and another application program. When the function that needs to be performed by the module included in the streaming media information processing apparatus provided in the embodiments of this application is implemented by using software or firmware, or the streaming media information processing method provided in the method embodiments of this application is performed, program code used to implement the technical solutions provided in the embodiments of this application is stored in the memory 1502, and the processor 1501 performs an operation that needs to be performed by the module included in the streaming media information processing apparatus, or performs the media data processing method provided in the method embodiments of this application.

The input/output interface 1503 is configured to receive input data and information, and output data such as an operation result.

The communications interface 1504 uses a transceiving apparatus, for example but not limited to, a transceiver, to implement communication between the computer device 100 and another device or communications network. The communications interface may be used as an obtaining module or a sending module in a processing apparatus.

The bus 1505 may include a channel for transferring information between components (such as the processor 1501, the memory 1502, the input/output interface 1503, and the communications interface 1504) of the computer device 1500.

It should be noted that although the computer device 1500 shown in FIG. 15 shows only the processor 1501, the memory 1502, the input/output interface 1503, the communications interface 1504, and the bus 1505, in a specific implementation process, a person skilled in the art should understand that the computer device 1500 further includes another component required for implementing normal operation. For example, the computer device 1500 may further include a display configured to display to-be-played video data. In addition, based on a specific requirement, a person skilled in the art should understand that the computer device 1500 may further include a hardware component for implementing another additional function. In addition, a person skilled in the art should understand that the computer device 1500 may include only a component essential for implementing this embodiment of this application, but not necessarily include all the components shown in FIG. 15.

It should be understood that in the embodiments of this application, "B corresponding to A" indicates that B is associated with A, and B may be determined based on A. However, it should be further understood that determining A based on B does not mean that B is determined based on A only; and B may alternatively be determined based on A and/or other information.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

In the several embodiments provided in this application, it should be understood that the disclosed systems, apparatuses, and methods may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (Digital Versatile Disc, DVD)), or a semiconductor medium (for example, a Solid State Disk, SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A media data processing method, wherein the method comprises:
obtaining bitstream data, wherein the bitstream data comprises region type information, the region type information is used to indicate a description manner of a location of a target region on a sphere, and the description manner comprises a point description manner or a surface description manner;
parsing the bitstream data to obtain region location information corresponding to the description manner, wherein the region location information is used to indicate the location of the target region on the sphere;
obtaining media data corresponding to the target region; and
processing the media data based on the region type information and the region location information.

2. The method according to claim 1, wherein the bitstream data is a media data track.

3. The method according to claim 2, wherein the region type information is located in supplemental enhancement information SEI of the media data track.

4. The method according to claim 3, wherein the bitstream data is a metadata track.

5. The method according to claim 1, wherein the bitstream data comprises a shape type parameter of the target region, and a value of the shape type parameter indicates the region type information.

6. A media data processing method, wherein the method comprises:
generating bitstream data, wherein the bitstream data comprises region type information of a target region on a sphere, the region type information is used to indicate a description manner of a location of the target region on the sphere, the description manner comprises a point description manner or a surface description manner, the point description manner and the surface description manner correspond to different region location information in the bitstream data, and the region location information is used to indicate the location of the target region on the sphere; and
sending the bitstream data.

7. The method according to claim 6, wherein the bitstream data is a media data track.

8. The method according to claim 7, wherein the region type information is located in supplemental enhancement information SEI of the media data track.

9. The method according to claim 6, wherein the bitstream data is a metadata track.

10. The method according to claim 6, wherein the bitstream data comprises a shape type parameter of the target region, and a value of the shape type parameter indicates the region type information.

11. A media data processing apparatus, wherein the apparatus comprises:
an obtaining unit, configured to obtain bitstream data, wherein the bitstream data comprises region type information, the region type information is used to indicate a description manner of a location of a target region on a sphere, and the description manner comprises a point description manner or a surface description manner; wherein
the obtaining unit is further configured to parse the bitstream data to obtain region location information corresponding to the description manner, wherein the region location information is used to indicate the location of the target region on the sphere; and
the obtaining unit is further configured to obtain media data corresponding to the target region; and
a processing unit, configured to process the media data based on the region type information and the region location information that are obtained by the obtaining unit.

12. The apparatus according to claim 11, wherein the bitstream data is a media data track.

13. The apparatus according to claim 12, wherein the region type information is located in supplemental enhancement information SEI of the media data track.

14. The apparatus according to claim 13, wherein the bitstream data is a metadata track.

15. The apparatus according to claim 11, wherein the bitstream data comprises a shape type parameter of the target region, and a value of the shape type parameter indicates the region type information.

16. A media data processing apparatus, wherein the apparatus comprises:
a generation unit, configured to generate bitstream data, wherein the bitstream data comprises region type information of a target region on a sphere, the region type information is used to indicate a description manner of a location of the target region on the sphere, the description manner comprises a point description manner or a surface description manner, the point description manner and the surface description manner correspond to different region location information in the bitstream data, and the region location information is used to indicate the location of the target region on the sphere; and
a sending unit, configured to send the bitstream data generated by the generation unit.

17. The apparatus according to claim 16, wherein the bitstream data is a media data track.

18. The apparatus according to claim 17, wherein the region type information is located in supplemental enhancement information SEI of the media data track.

19. The apparatus according to claim 16, wherein the bitstream data is a metadata track.

20. The apparatus according to claim 16, wherein the bitstream data comprises a shape type parameter of the target region, and a value of the shape type parameter indicates the region type information.
